(19) Europäisches Patentamt
European Patent Office
Office européen des brevets

(11) **EP 4 424 775 A1**

(12) **DEMANDE DE BREVET EUROPEEN**

(43) Date de publication:
**04.09.2024  Bulletin 2024/36**

(21) Numéro de dépôt: **24159443.1**

(22) Date de dépôt: **23.02.2024**

(51) Classification Internationale des Brevets (IPC):
**C08L 97/02** (2006.01)      **C08L 27/06** (2006.01)

(52) Classification Coopérative des Brevets (CPC):
(C-Sets disponibles)
**C08L 97/02**                              (Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:  **01.03.2023   FR 2301903**

(71) Demandeurs:
• **Voisin, Bernard**
  **26200 Montélimar (FR)**
• **Bisteur, Lionel**
  **69360 Ternay (FR)**

• **Marche, Patrick**
  **69006 Lyon (FR)**

(72) Inventeurs:
• **Voisin, Bernard**
  **26200 Montélimar (FR)**
• **Bisteur, Lionel**
  **69360 Ternay (FR)**
• **Marche, Patrick**
  **69006 Lyon (FR)**

(74) Mandataire: **Germain Maureau**
  **12, rue Boileau**
  **69006 Lyon (FR)**

(54)    **COMPOUND COMPRENANT DU CHLORURE DE POLYVINYLE ET DES FIBRES VÉGÉTALES ET PROCÉDÉ DE FABRICATION D'UN TEL COMPOUND**

(57)    La présente invention se rapporte à un procédé de fabrication d'un compound comprenant du polychlorure de vinyle et des fibres végétales, la teneur en fibres végétales étant d'au moins 50% en masse, par rapport à la masse du compound, au moyen d'une installation de co-malaxage comprenant un mélangeur à chaud (2), un mélangeur à froid (3), un co-malaxeur (4) muni d'une première entrée (15), d'une ou plusieurs entrées intermédiaires (17, 18, 19, 27), d'une dernière entrée (16), et d'une sortie (20), les fibres végétales étant introduites dans le co-malaxeur (4) en au moins deux étapes. L'invention concerne également le compound obtenu par ce procédé et une méthode de fabrication en continu d'une structure extrudée potentiellement moussée comprenant du polychlorure de vinyle et des fibres végétales, la teneur en fibres végétales étant d'au moins 50% en masse, par rapport à la masse de ladite structure extrudée.

[Fig. 1]

EP 4 424 775 A1

(52) Classification Coopérative des Brevets (CPC):
(Cont.)

C-Sets
**C08L 97/02, C08K 3/013, C08L 29/04;**
**C08L 97/02, C08L 27/06;**
**C08L 97/02, C08L 27/06, C08K 3/013**

**Description**

La présente invention se rapporte à un procédé de fabrication en continu d'un compound dit « NFC » (« NFC » étant l'acronyme pour l'expression anglaise « Natural Fiber Composite », autrement dit en français, composites à fibres naturelles), comprenant du polychlorure de vinyle et des fibres végétales, la teneur en fibres végétales étant d'au moins 50% en masse, par rapport à la masse du compound.

Au sens de la présente demande, on entend par « compound » un matériau composite comprenant au moins deux composés non miscibles initialement mais capables d'être mélangés de telle sorte que ces au moins deux composés soient intimement liés dans le produit final. Le compound est le produit final issu de ce mélange.

La présente invention se rapporte également à un compound comprenant du polychlorure de vinyle et des fibres végétales, la teneur en fibres végétales étant d'au moins 50% en masse, par rapport à la masse du compound, ainsi qu'à une méthode de fabrication en continu d'une structure extrudée comprenant du polychlorure de vinyle et des fibres végétales, la teneur en fibres végétales étant d'au moins 50% en masse, de préférence d'au moins 60% en masse, par rapport à la masse de la structure extrudée.

Par « structure extrudée », on entend au sens de la présente demande un produit fini obtenu par extrusion d'un compound, puis mise en forme, refroidissement et découpe de la forme extrudée. Les structures extrudées au sens de la présente demande comprennent par exemple les aménagements extérieurs utiles dans le domaine de la construction et des travaux publics, comme par exemple les lames destinées au bardage de bâtiments, les lames de terrasses, etc...

Dans le secteur du bâtiment, on cherche de plus en plus à utiliser des compounds comprenant une partie de matériaux naturels, comme les fibres naturelles, dans un souci de développement durable. Dans cette optique, un compound traditionnellement utilisé est le bois composite ou en anglais « wood plastic composite » (WPC) qui est un matériau composite thermoplastique composé de fibres de bois et de polymères thermoplastiques. Le bois est utilisé comme une charge afin de réduire le prix du compound et d'apporter plus de stabilité dimensionnelle au polymère. Le polymère utilisé est majoritairement le polyéthylène (PE). Le polypropylène (PP) peut également être utilisé.

Toutefois, l'utilisation des polyoléfines dans la composition de compounds pour la fabrication de structures extrudées pour le secteur du bâtiment présente plusieurs inconvénients. En effet, les polyoléfines, telles que le polyéthylène et le polypropylène, sont classées « combustible à facilement inflammable » dans le classement de la norme française NF P 92-507. Cette norme classe les matériaux de M0 à M4. Par exemple, le polyéthylène haute densité (PEHD) est classé M3 sans ignifuge. Ainsi, la présence de ces polymères dans un compound pour fabriquer des structures extrudées impacte le classement au feu des bâtiments comprenant de telles structures.

Par ailleurs, les polyoléfines présentent un coefficient de dilatation thermique très élevé (de l'ordre de $150 \times 10^{-6}$ °C$^{-1}$). Un tel coefficient de dilatation thermique ne permet pas d'obtenir la stabilité dimensionnelle du produit fini requise par les exigences de la construction. En effet, les lames de bardage d'un bâtiment sont destinées à être emboîtées les unes dans les autres. Ces emboîtements doivent être précis et rester stables dimensionnellement face aux changements de température auxquels sont généralement soumis les extérieurs des bâtiments.

Enfin, bien que plus léger que le polymère seul, le bois composite présente une densité relativement élevée. Par exemple, un compound de bois composite présente une densité moyenne d'environ 1300 kg/m$^3$. Ainsi, une lame de bardage fabriquée à partir d'un tel compound présente un poids moyen d'environ 15 kg/m$^2$. Or, les lames de bardage des bâtiments sont posées exclusivement à la main. Ainsi, plus les lames sont lourdes, plus le travail de pose est fastidieux. Un tel travail peut en particulier être à l'origine de troubles musculosquelettiques. Il est également à noter que l'utilisation d'un compound, comme le bois composite, présentant une densité élevée, génère un prix de revient élevé pour la structure extrudée, du fait d'un poids important de matière coûteuse dans ladite structure extrudée.

Une alternative aux polyoléfines pour fabriquer du bois composite est d'utiliser du polychlorure de vinyle (PVC) en lieu et place des polyoléfines. Le PVC rigide est classé « non inflammables à difficilement inflammables » (M1) dans la norme française suscitée NF P 92-507. Dans le secteur de la construction, c'est le PVC qui offre le meilleur comportement au feu. Il ne propage pas la flamme et dégage peu de chaleur. Le PVC est effectivement naturellement ignifugé. Grâce à sa teneur élevée en chlore provenant du sel (57% en moyenne), il est difficilement inflammable et contribue faiblement à la propagation de l'incendie. Soumis au feu, le PVC rigide se ramollit et carbonise, sans persistance de flamme, vers 230 °C. Selon le classement européen Euroclasse (Norme européenne Euroclasse EN 13501-1+A1), la plupart des produits de construction en PVC sont classés B ou C pour leur réaction au feu (contribution faible au feu), sur une échelle de A à F.

Toutefois, les techniques connues à ce jour pour réaliser des compounds comprenant du PVC et des fibres naturelles, qui sont des techniques mettant en oeuvre une extrudeuse, ne permettent pas d'incorporer plus de 40-45% en masse de fibres naturelles, par rapport à la masse du compound. En effet, lors de la mise en oeuvre de ces techniques, les différents composants de départ sont pesés et mélangés dans un seul silo en entrée de l'extrudeuse. Il faut ensuite chauffer ce mélange pour gélifier le PVC à environ 180° et le taux de charge de fibres de bois agit comme un isolant qui freine la montée en température. Il est donc impossible avec ces méthodes d'augmenter le taux de fibres de bois au delà des 45% en masse, par rapport à la masse du compound. Par ailleurs, le taux d'humidité des fibres de bois est usuellement entre 8-12%, parfois même jusque 15%, ce qui créé de l'humidité dans l'extrudeuse. L'énergie supplémentaire nécessaire à la vaporisation de cette eau, soit 2250 J/g (à pression atmosphérique et à 100°C), doit être fournie par l'extrudeuse. De plus, le volume occupé par l'eau et la vapeur réduit la capacité de production de la ligne. La vaporisation de l'eau contenue dans le bois peut générer au final des inclusions d'air dans le compound.

Par ailleurs, l'association du PVC et des fibres de bois favorise les réactions de dégradation dues aux rayons ultraviolets. Les fibres de bois comprennent de la lignine en quantité significative, généralement de l'ordre d'environ 20% en masse, par rapport à la masse des fibres de bois. Dans un compound fabriqué à partir de PVC et de fibres de bois, la lignine présente à la surface du compound subit les effets des rayons ultraviolets. La formation de radicaux entraîne la propagation de la dégradation au sein des fibres de bois mais aussi du PVC. L'enchaînement de ces réactions va rapidement provoquer une fragilisation et une décoloration du compound et/ou de la structure extrudée fabriquée à partir de ce compound.

Enfin, le coefficient de dilatation thermique du PVC est de $80 \times 10^{-6}$ °C$^{-1}$. Un tel coefficient de dilatation thermique est trop élevé pour permettre des emboîtements stables et précis requis par les exigences de la construction.

Il subsiste donc le besoin d'un nouveau compound, ainsi qu'un procédé de fabrication d'un tel compound, permettant de pallier aux inconvénients des techniques existantes.

La présente invention porte sur un compound comprenant du polychlorure de vinyle (PVC) et des fibres végétales, la teneur en fibres végétales étant d'au moins 50% en masse, de préférence d'au moins 60% en masse, par rapport à la masse du compound.

Par « polychlorure de vinyle » ou « PVC » on entend au sens de la présente demande du polychlorure de vinyle, que ce polychlorure de vinyle soit vierge ou issu de polychlorure de vinyle recyclé. Comme exemples de PVC recyclés, on peut citer les déchets en PVC souple (S), comme par exemple les revêtements de sols, ou en PVC rigide (R), comme par exemple les profils de fenêtre, les fermetures, les profils divers, les tubes et les raccords. On peut également citer les membranes de toitures, les liners de piscine, les bâches, les faux plafonds. En vue de leur recyclage, ces déchets en PVC sont broyés et éventuellement regranulés.

Par « fibres végétales », on entend au sens de la présente demande des fibres naturelles essentiellement issues de l'herbe, en particulier de l'herbe coupée ou du seigle coupé. Ces fibres sont principalement composées de fibres dites « dures », essentiellement à base de cellulose. Les fibres d'herbe coupée et de seigle coupé sont caractérisées par une teneur particulièrement faible en lignine. Les fibres naturelles de ces matières sont principalement constituées d'alpha et d'hémicellulose. Des trois types de cellulose, à savoir l'alpha ($\alpha$) -cellulose, la bêta ($\beta$) -cellulose et la gamma ($\gamma$) -cellulose, l'a-cellulose, qui est hautement cristalline et a le plus haut degré de polymérisation, est la plus stable et la plus pure. Les fibres végétales utilisables au sens de la présente invention peuvent également comprendre les fibres libériennes, issues du chanvre, du jute, de la ramie et du lin,

De manière avantageuse, l'alpha-cellulose est présente dans les fibres végétales du compound selon l'invention à une teneur allant de 20 à 30%, en masse, par rapport à la masse totale des fibres végétales. De manière avantageuse, l'hémicellulose est présente dans les fibres végétales du compound selon l'invention à une teneur allant de 15 à 25 % en masse, par rapport à la masse totale des fibres végétales. De manière avantageuse, la lignine est présente dans les fibres végétales du compound selon l'invention à une teneur inférieure ou égale à 5 % en masse, par rapport à la masse totale des fibres végétales.

Ainsi, les fibres de bois, dont la teneur en lignine est d'environ 30% en masse, par rapport à la masse des fibres de bois, ne rentrent pas dans la définition des fibres végétales selon la présente invention.

Le degré de pureté élevé des fibres végétales de l'invention, du fait de leur teneur élevée en composés cellulosiques, améliore la capacité de fixation du PVC. En outre, les fibres naturelles d'une grande pureté sont particulièrement durables, ce qui est particulièrement avantageux lorsque les fibres naturelles sont utilisées à une haute teneur dans un compound que l'on souhaite rendre 100% recyclable.

La présente invention se rapporte encore à un procédé de fabrication en continu d'un compound comprenant du polychlorure de vinyle et des fibres végétales, la teneur en fibres végétales étant d'au moins 50% en masse, par rapport à la masse du compound, au moyen d'une installation de co-malaxage comprenant au moins un mélangeur à chaud, au moins un mélangeur à froid, au moins un co-malaxeur muni d'une première entrée, d'une ou plusieurs entrées intermédiaires, d'une dernière entrée, et d'une sortie, ledit procédé comprenant au moins les étapes suivantes :

- A) un pré-mélange comprenant :

    au moins du polychlorure de vinyle (PVC),
    au moins une charge,
    optionnellement au moins un plastifiant, est préparé dans le mélangeur à chaud à une température allant d'environ 110°C à environ 130°C, de préférence d'environ 120°C,

- B) le pré-mélange obtenu à l'issue de l'étape A) est transféré dans le mélangeur à froid, dans lequel il est mélangé à température ambiante avec une première portion de fibres végétales pour obtenir un premier mélange,
- C) le premier mélange obtenu à l'issue de l'étape B) est introduit dans la première entrée du co-malaxeur et est gélifié au sein dudit co-malaxeur par malaxage et chauffage jusqu'à une température allant d'environ 160°C à environ 180°C, de préférence à une température d'environ 170°C,
- D) une deuxième portion de fibres végétales est introduite dans la dernière entrée du co-malaxeur et est ajoutée au premier mélange issu de l'étape C) pour obtenir un mélange final,
- E) le mélange final est gélifié au sein du co-malaxeur, par malaxage et chauffage jusqu'à une température allant d'environ 160°C à environ 180°C, de préférence à une température d'environ 170°C,
- F) le mélange final gélifié obtenu à l'issue de l'étape E) est extrudé à la sortie du co-malaxeur pour obtenir ledit compound.

Par « charge », on entend au sens de la présente demande tout composé inerte chimiquement vis-à-vis du compound. Les charges pouvant être utilisées dans le procédé selon l'invention peuvent être choisies dans le groupe comprenant les charges minérales. Par exemple, on peut citer le talc, le carbonate de calcium.

Par « plastifiant », on entend au sens de la présente demande tout composé capable de fluidifier le compound. Les plastifiants pouvant être utilisés dans le procédé selon l'invention peuvent être choisis dans le groupe des plastifiants exempts de phtalates.

Par « Température ambiante », on entend au sens de la présente demande une température allant d'environ 20°C à environ 25°C.

Dans une forme de mise en oeuvre, le procédé comprend en outre une ou plusieurs étapes intermédiaires prenant place entre l'étape C) et l'étape D), la ou lesdites étapes intermédiaires étant choisies parmi les étapes suivantes :

- C1) au moins un additif est introduit dans le co-malaxeur par l'une des entrées intermédiaires et est ajouté au premier mélange,
- C2) au moins un pigment est introduit dans le co-malaxeur par l'une des entrées intermédiaires et est ajouté au premier mélange,
- C3) au moins un composé recyclé est introduit dans le co-malaxeur par l'une des entrées intermédiaires et est ajouté au premier mélange,
- C4) au moins un agent moussant est introduit dans le co-malaxeur par l'une des entrées intermédiaires et est ajouté au premier mélange,
- C5) une ou plusieurs portion(s) additionnelle(s) de fibres végétales est(sont) introduite(s) dans le co-malaxeur par l'une des entrées intermédiaires et est(sont) ajoutée(s) au premier mélange.

Par « additif », on entend au sens de la présente demande tout composé capable de conférer une ou plusieurs propriétés physico-chimiques au compound. Les additifs pouvant être utilisés dans le procédé selon l'invention peuvent par exemple être choisis dans le groupe comprenant les agents de stabilité aux UV, les agents ignifuges, les agents anti-fongiques, les agents de processabilité et leurs combinaisons.

Par « pigment », on entend au sens de la présente demande tout composé capable de colorer en masse le compound. Les pigments pouvant être utilisés dans le procédé selon l'invention peuvent par exemple être choisis dans le groupe comprenant les pigments minéraux naturels.

Par « composé recyclé », on entend au sens de la présente demande tout composé capable de compléter le mélange préparé dans le co-malaxeur, de baisser le coût final du compound et/ou de potentiellement renforcer le compound. Les composés recyclés pouvant être utilisés dans le procédé selon l'invention peuvent par exemple être choisis dans le groupe comprenant les fibres de PVC issues de la déconstruction ou de rebuts industriels, par exemple issues de bâches de camions.

Par « agent moussant », on entend au sens de la présente demande tout composé, en particulier toute substance chimique, capable sous l'influence de la chaleur, de libérer des gaz pour créer un réseau de bulles. Les agents moussants pouvant être utilisés dans le procédé selon l'invention peuvent par exemple être choisis dans le groupe comprenant notamment l'azodicarbonamide ($C_2H_4N_4O_2$), le bicarbonate de sodium, et leurs mélanges.

Dans une mise en oeuvre avantageuse du procédé selon l'invention, le procédé comprend au moins l'étape C4).

Dans une mise en oeuvre avantageuse du procédé selon l'invention, ladite première portion de fibres végétales représente d'environ 25% à environ 70%, de préférence d'environ 25% à environ 50%, en masse par rapport à la masse totale des fibres végétales introduites dans le co-malaxeur.

Dans une mise en oeuvre avantageuse du procédé selon l'invention, ladite deuxième portion de fibres végétales représente d'environ 15% à environ 50%, de préférence d'environ 15% à environ 30%, en masse par rapport à la masse totale des fibres végétales introduites dans le co-malaxeur.

Dans une forme de mise en oeuvre du procédé selon l'invention, à l'issue de l'étape F), ledit compound est soumis à une étape de granulation pour obtenir des granulés du compound. Les granulés peuvent ensuite être ensachés.

Un autre aspect de l'invention se rapporte à une méthode de fabrication en continu d'une structure extrudée comprenant du polychlorure de vinyle et des fibres végétales, la teneur en fibres végétales étant d'au moins 50% en masse, de préférence d'au moins 60% en masse, par rapport à la masse de ladite structure extrudée, comprenant au moins les étapes suivantes :

- i) le compound obtenu à l'issue de l'étape F) du procédé ci-dessus est introduit dans une filière,
- ii) à l'issue de la filière, le compound est mis en forme et refroidi au sein d'un conformateur,
- iii) à l'issue de l'étape ii), le compound mis en forme est soumis à une étape de tirage,
- iv) à l'issue de l'étape iii) le compound mis en forme et étiré est soumis à une étape de découpe afin d'obtenir la structure extrudée.

Dans une forme de mise en oeuvre de la méthode selon l'invention, la structure extrudée est une lame destinée au bardage de bâtiments.

Le procédé de fabrication d'un compound selon l'invention permet d'atteindre un taux de fibres végétales supérieur ou égal à 50%, de préférence supérieur ou égal à 60% en masse, par rapport à la masse du compound. Le compound gagne en stabilité mais aussi en prix de revient du fait que les fibres végétales sont plus économiques que le PVC.

Dans le procédé selon l'invention, le fait introduire les fibres végétales dans le co-malaxeur en au moins deux étapes, au moyen de plusieurs entrées du co-malaxeur, permet d'utiliser la puissance du co-malaxeur à bon escient et ainsi d'incorporer une teneur finale en fibres végétales dans le compound supérieure ou égale à 50% en masse, par rapport à la masse du compound.

Par ailleurs, l'ajout de fibres végétales à haute teneur permet de descendre le coefficient de dilatation thermique du compound selon l'invention à moins de $35 \times 10^{-6}$ °C$^{-1}$. Un tel coefficient de dilatation thermique est comparable à celui du bois, ce qui donne une très grande stabilité dimensionnelle aux produits fabriqués avec le compound selon l'invention.

Grâce au procédé et au compound selon l'invention, l'empreinte carbone des structures extrudées fabriquées à partir de ce compound est améliorée. En effet, intégrer des fibres végétales telles que des fibres issues d'herbe coupée et de seigle coupé, qui constituent une biomasse issue de la culture de végétaux, dans un produit à durée de vie longue comme un matériau de construction permet de séquestrer de façon pérenne du carbone : les réémissions de $CO_2$ dues à la décomposition des fibres végétales étant retardées par rapport au cycle agricole naturel plus court, le phénomène de puits carbone est optimisé. Du fait de ce prélèvement initial de $CO_2$ dans l'atmosphère, les fibres végétales offrent donc un bénéfice vis à vis du changement climatique. On dit qu'ils constituent un puits carbone et le fait que le produit final, telles que les structures extrudées, soit 100% recyclable en fin de vie permet d'allonger l'unité fonctionnelle indiquée dans les FDES (FICHE de DECLARATION ENVIRONNEMENTALE et SANITAIRE).

Afin d'optimiser la rentabilité énergétique du procédé selon l'invention, il est avantageusement prévu d'utiliser la chaleur fatale de l'étape A) de production du pré-mélange de PVC afin de sécher la première portion de fibres végétales ajoutée dans le mélangeur à froid lors de l'étape B). En effet, lors de l'étape A), le pré-mélange est chauffé par friction à une température d'environ 120°C. Ce pré-mélange doit ensuite être refroidi à une température inférieure ou égale à 50°C. Dans une mise en oeuvre avantageuse du procédé selon l'invention, le pré-mélange est refroidi par contact avec la première portion de fibres végétales qui sont à température ambiante et qui présentent un taux d'humidité allant d'environ 8% à environ 12%. On réduit ainsi de façon significative l'énergie froide nécessaire au refroidissement du pré-mélange.

Les avantages de la présente invention apparaîtront de façon plus visible au de la description détaillée ci-dessous et des dessins dans lesquels :

- [Fig. 1] est un schéma d'une installation de co-malaxage permettant de mettre en oeuvre le procédé selon l'invention,
- [Fig. 2] est un schéma d'une installation de co-malaxage et d'extrusion permettant de mettre en oeuvre la méthode de fabrication d'une structure extrudée selon l'invention.

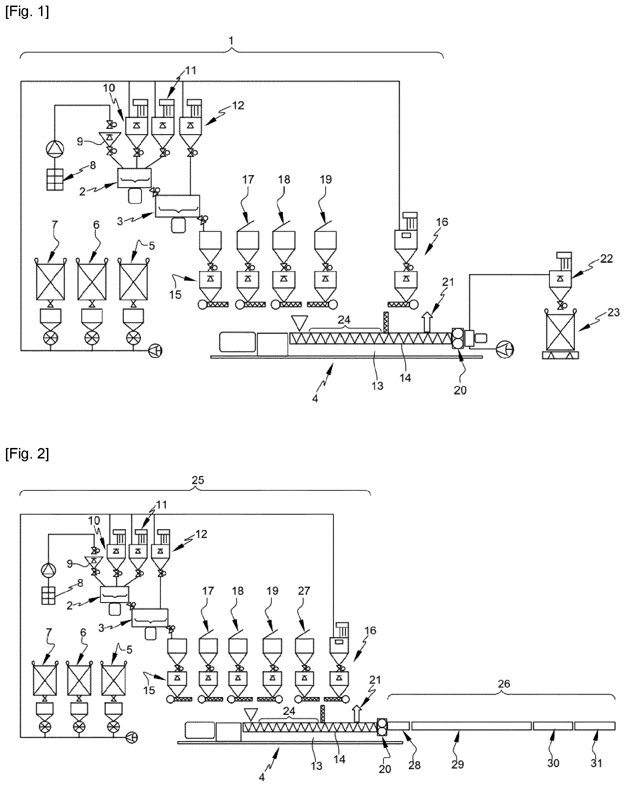

En référence à la Figure 1 est montrée une installation 1 de co-malaxage comprenant un mélangeur à chaud 2, un mélangeur à froid 3 et un co-malaxeur 4 permettant de mettre en oeuvre le procédé de fabrication en continu d'un compound selon l'invention. L'installation comprend également plusieurs silos de stockage de composés, et en particulier un silo 5 de stockage de fibres végétales, un silo 6 de stockage de charge, un silo 7 de stockage de PVC.

L'installation 1 comprend également un réservoir 8 de stockage d'un plastifiant.

Le mélangeur à chaud 2 comprend une trémie 9 d'alimentation en plastifiant, une trémie 10 d'alimentation en PVC et une trémie 11 d'alimentation en charge.

Le mélangeur à froid 3 est situé en aval du mélangeur à chaud 2, et il comprend une trémie 12 d'alimentation en fibres végétales par laquelle la première portion de fibres végétales est introduite dans le mélangeur à chaud 3.

Le co-malaxeur 4 est situé en aval du mélangeur à chaud 3. Le co-malaxeur 4 est du type de co-malaxeur présentant un fourreau 13 muni d'ergots (non représentés) sur sa face interne et d'une vis 14 dont le filet est interrompu de place en place pour laisser passer les ergots du fourreau, dans un double mouvement de rotation et de va-et-vient longitudinal. Ces mouvements coordonnés provoquent des écoulements complexes permettant un mélange et une homogénéisation efficaces de la matière présente à l'intérieur du fourreau.

Le co-malaxeur 4 comprend une première entrée 15 destinée à introduire le premier mélange issu du mélangeur à froid 4 dans le fourreau 13 du co-malaxeur 4. Le co-malaxeur comprend également une dernière entrée 16 destinée à introduire dans le fourreau 13 une deuxième portion de fibres végétales. Entre la première entrée 15 et la dernière entrée 16, sont disposées une pluralité d'entrées intermédiaires pouvant permettre d'incorporer dans le fourreau 13 plusieurs composés. Sur l'exemple représenté, le co-malaxeur 4 comprend en particulier une entrée intermédiaire 17 pouvant par exemple être utilisée pour introduire dans le fourreau 13 un ou plusieurs additifs, une entrée intermédiaire 18 pouvant par exemple être utilisée pour introduire dans le fourreau 13 un ou plusieurs pigments, et une entrée intermédiaire 19, pouvant par exemple être utilisée pour introduire dans le fourreau 13 un ou plusieurs produits recyclés.

Le co-malaxeur 4 comprend également une sortie 20 par laquelle le mélange final gélifié est extrudé pour obtenir le compound. En amont de la sortie 20 du co-malaxeur 4, se trouve une sortie de dégazage 21.

En aval de la sortie 20 du co-malaxeur 4 se trouve une trémie 22 d'alimentation en compound d'une granulatrice 23.

Le procédé de fabrication en continu d'un compound au moyen de l'installation 1 se déroule comme suit.

Le PVC, la charge et éventuellement le plastifiant sont mélangés dans le mélangeur à chaud 2 pour former un pré-mélange. Lors de cette phase d'additivation du PVC, le pré-mélange est chauffé par friction à environ 120°C.

Le pré-mélange obtenu à l'issue cette étape est transféré dans le mélangeur à froid 3, dans lequel il est mélangé à température ambiante avec une première portion de fibres végétales pour obtenir un premier mélange. Lors de cette étape, la chaleur de 120°C du pré-mélange est utilisée pour sécher la première portion de fibres végétales tout en réduisant l'énergie froide nécessaire au refroidissement du pré-mélange.

Cette première portion de fibres végétales représente d'environ 25% à environ 70%, de préférence d'environ 25% à environ 50%, en masse par rapport à la masse totale des fibres végétales qui seront introduites dans le co-malaxeur. Ainsi, dans le procédé selon l'invention, la majeure partie des fibres végétales utilisées dans la fabrication du compound est séchée dans ce mélangeur à froid : cela a pour avantage de réduire l'impact de l'humidité dégagée par les fibres végétales dans le co-malaxeur. Par ailleurs, l'introduction de la première portion de fibres végétales dans le mélangeur à froid permet de refroidir le pré-mélange jusqu'à une température de 45-50°C maximum.

Ainsi, en introduisant la première portion de fibres végétales dans le mélangeur à froid 3, les trois avantages suivants sont combinés :

- Un refroidissement vertueux et économique du pré-mélange sans apport de frigorie,
- Un premier mélange homogène PVC + fibres végétales
- Une déshumidification des fibres végétales au contact du pré-mélange chaud.

Pour illustrer ces avantages, on peut faire le calcul suivant à l'aide des données de chaleur spécifique pour les fibres végétales d'une part et de chaleur spécifique du PVC rigide d'autre part :

- On note $Cp_1$ la chaleur spécifique du PVC rigide ($J.kg^{-1}.K^{-1}$), soit 880 J/kg°C

- On note $Cp_2$ la chaleur spécifique de la fibre végétale, soit 2300 J/kg°C

On connaît l'égalité suivante :

$$m_1.Cp_1.T_1 + m_2.Cp_2.T_2 = m.Cp.T$$

Ainsi, pour un premier mélange dans le mélangeur à froid 2 comprenant, en masse par rapport à la masse du premier mélange :

- 50% de pré-mélange, à 120°C,
- 50% de fibres végétales, à 20°C.

On obtient l'égalité suivante :

$$(1 \text{ kg} * 880 * 120°C) + (1 \text{ kg} * 2300 * 20°C) = 151600 \text{ J} = 2 \text{ kg} * 1590 * T$$

La température T finale obtenue au sein du mélangeur à froid est donc de T=47,6°C.

Le pré-mélange est ainsi refroidi à une température de 47,6°C par simple contact avec les fibres végétales, sans qu'il soit nécessaire d'apporter des frigories additionnelles.

Par ailleurs, le préséchage des fibres végétales augmente le rendement du co-malaxeur 4.

Le premier mélange ainsi obtenu dans le mélangeur à froid 3 est introduit dans la première entrée 15 du co-malaxeur 4 et est gélifié au sein dudit co-malaxeur 4 par malaxage et chauffage jusqu'à une température d'environ 170°C. Contrairement au PVC, la fibre végétale ne fond pas dans le co-malaxeur. Cependant, elle va consommer une partie non négligeable de l'énergie de friction au détriment du PVC. Par ailleurs, la configuration des internes du co-malaxeur assure un mélange intime et une répartition homogène fibre végétale/PVC.

Dans cette zone de gélification 24 portée à 170°C, des additifs, des pigments, des produits recyclés peuvent être ajoutés au premier mélange. Ces composés additionnels sont incorporés et intimement mélangés au premier mélange afin de fabriquer une pâte de matière homogène.

Un taux de fibres végétales élevé introduit dans un co-malaxeur peut générer une élévation de la pression en bout de vis du co-malaxeur. Le procédé selon l'invention résout cette difficulté en incorporant les fibres végétales sur au moins deux entrées séparées du co-malaxeur.

Ainsi, une deuxième portion de fibres végétales est introduite dans la dernière entrée 16 du co-malaxeur 4 et est ajoutée au premier mélange issu de la zone de gélification 24 pour obtenir un mélange final. La teneur de la deuxième portion de fibres végétales représente environ 15% à environ 50%, de préférence environ 15% à environ 30%, en masse par rapport à la masse totale des fibres végétales introduites dans le co-malaxeur. Les fibres végétales de cette deuxième portion sont par exemple introduites directement dans le co-malaxeur 4 sans préséchage préalable. Les fibres végétales peuvent présenter un taux d'humidité allant d'environ 8% à environ 12%.

Le mélange final est gélifié au sein du co-malaxeur, par malaxage et chauffage jusqu'à une température d'environ 170°C. Lors de cette étape, l'humidité des fibres végétales de la deuxième portion de fibres végétales est évacuée par la sortie de dégazage 21. Puis le mélange final gélifié est extrudé à la sortie 20 du co-malaxeur 4 pour obtenir ledit compound.

On obtient un compound comprenant du PVC et des fibres végétales, la teneur en fibres végétales étant d'au moins 50% en masse, de préférence d'au moins 60% en masse, par rapport à la masse du compound.

A la sortie du co-malaxeur 4, le compound peut être soumis à une étape de granulation au moyen de la granulatrice 23 pour obtenir des granulés du compound. Les granulés peuvent séchés et ensachés. Ces granulés, ou encore pellets, peuvent ensuite être utilisés ultérieurement pour extruder des lames ou des profilés, sur le lieu de production du compound ou ailleurs.

Le procédé selon l'invention est particulièrement avantageux. Il permet d'incorporer un taux de fibres végétales important dans un compound à base de PVC. Par ailleurs, le procédé selon l'invention présente une excellente répétabilité, ce qui permet de produire des compounds dont on peut prédire de façon fiable le comportement lors des opérations de transformations ultérieures (extrusion, etc...).

En référence à la Figure 2 est montré une installation 25 de co-malaxage similaire à l'installation 1 de la Figure 1 comprenant en outre une ligne d'extrusion 26 permettant de mettre en oeuvre la méthode de fabrication d'une structure extrudée selon l'invention.

Les éléments de l'installation 1 de co-malaxage de la Figure 1 reproduits dans l'installation 25 de co-malaxage de la Figure 2 sont identifiés par les mêmes références. L'installation 25 de co-malaxage de la Figure 2 se distingue de celle de la Figure en ce qu'elle comporte une entrée intermédiaire additionnelle 27, destinée à introduire dans la zone de gélification 24 du co-malaxeur 4 un ou plusieurs agents moussants.

En effet, le compound obtenu par le procédé de fabrication de la Figure 1 peut présenter une densité relativement élevée, par exemple de l'ordre de 1400 kg/m$^3$. Compte tenu du coût élevé du PVC, le prix de revient d'un compound d'une telle densité peut être important.

Ainsi, lorsqu'on souhaite extruder des profilés directement en sortie du co-malaxeur 4, il peut ainsi être avantageux de pouvoir mousser le compound au moment de l'extrusion du profilé afin de réduire de manière significative la densité et donc le poids et le prix au m$^2$ de ce profilé. Par exemple, les mousses PVC sont connues pour disposer d'une très bonne stabilité chimique et d'une bonne résistance au feu et aux intempéries, ce qui justifie une utilisation efficace de ces mousses dans un environnement marin.

Le PVC est un polymère amorphe relativement visqueux qui retient avantageusement les bulles de gaz.

L'azodicarbonamide est un composé non toxique et il peut être utilisé comme agent moussant efficacement dans la méthode selon l'invention. La température de décomposition de l'azodicarbonamide est comprise entre 165 et 195 °C. La structure moléculaire de ce composé contient -N=N-, qui décompose l'azote lorsqu'il est chauffé pour obtenir l'effet moussant.

Par exemple, la teneur en azodicarbonamide va de 0,5 à 1,0 %, en masse, par rapport à la masse du compound.

Le bicarbonate de sodium est un agent moussant endothermique et peut également être utilisé comme agent moussant dans la méthode selon l'invention. Le bicarbonate de sodium commence à se décomposer lentement et libère du $CO_2$ en chauffant.

Comme il apparaît de la Figure 2, les agents moussants sont introduits dans la zone chaude de gélification 24.

En référence à la Figure 2, la ligne d'extrusion 26 comprend une filière 28, un conformateur 29, un étireur 30, et un dispositif de découpe 31.

A la sortie 20 du co-malaxeur 4, le compound est introduit dans la filière 28. Les agents moussants se décomposent et génèrent des bulles dans la filière 28. A l'issue de la filière, le compound moussé est mis en forme et refroidi au sein du conformateur 29. Le compound moussé mis en forme est ensuite étiré par l'étireur 30, puis découpé par le dispositif de découpe 31. On obtient une structure extrudée moussée, présentant une densité réduite par rapport à une structure non moussée.

Le moussage du compound présente de nombreux avantages. Il permet en particulier :

- Un gain de poids de la structure extrudée de 20% à 50% par rapport à la même structure extrudée non moussée,
- Une réduction du prix de la structure extrudée de 20% à 50% au m$^2$,
- D'augmenter le pouvoir d'isolation thermique des lames de bardage et de réduire la consommation énergétique des bâtiments (RT2012),
- D'améliorer la stabilité dimensionnelle de la lame,
- D'augmenter de 20% les cadences de production sur le co-malaxeur.

Les techniques permettant de mettre en oeuvre la méthode de fabrication en continu d'une structure extrudée au moyen du compound selon l'invention sont nombreuses. On peut par exemple citer l'extrusion, l'injections, le roto-moulage, le thermoformage...

Les domaines d'applications des produits finis tels que les structures extrudées pouvant être obtenues par la méthode selon l'invention sont très importants car la grande stabilité dimensionnelle des structures obtenues permet de s'affranchir des joints de dilatations dans toutes les situations d'emboîtements.

Le compound selon l'invention va donc pouvoir être utilisé dans toutes les applications ou l'on recherche un produit ayant un aspect esthétique (matière teintée dans la masse avec fibres visibles), un produit stable et indéformable, non conducteur du froid et du chaud, fortement chargé en fibres végétales pour agir en puit carbone tout en étant 100 % recyclable.

Les domaines d'applications couvrent :

- la fabrication de lames et profilés (extrusion directe ou indirecte depuis le co-malaxeur) pour le secteur du bâtiment, de la construction...
- la fabrication de sous-couches de revêtement de sol,
- l'injection de pièces composites à base de PVC, de WPC.

**Revendications**

1. Procédé de fabrication en continu d'un compound comprenant du polychlorure de vinyle et des fibres végétales, la teneur en fibres végétales étant d'au moins 50% en masse, par rapport à la masse du compound, au moyen d'une installation de co-malaxage comprenant au moins un mélangeur à chaud (2), au moins un mélangeur à froid (3), au moins un co-malaxeur (4) muni d'une première entrée (15), d'une ou plusieurs entrées intermédiaires (17, 18, 19, 27), d'une dernière entrée (16), et d'une sortie (20), ledit procédé comprenant au moins les étapes suivantes :

   - A) un pré-mélange comprenant :

      au moins du polychlorure de vinyle (PVC),
      au moins une charge,
      optionnellement au moins un plastifiant,

   est préparé dans le mélangeur à chaud (2) à une température allant d'environ 110°C à environ 130°C, de préférence d'environ 120°C,

   - B) le pré-mélange obtenu à l'issue de l'étape A) est transféré dans le mélangeur à froid (3), dans lequel il est mélangé à température ambiante avec une première portion de fibres végétales pour obtenir un premier mélange,

- C) le premier mélange obtenu à l'issue de l'étape B) est introduit dans la première entrée (15) du co-malaxeur (4) et est gélifié au sein dudit co-malaxeur par malaxage et chauffage jusqu'à une température allant d'environ 160°C à environ 180°C, de préférence à une température d'environ 170°C,
- D) une deuxième portion de fibres végétales est introduite dans la dernière entrée (16) du co-malaxeur (4) et est ajoutée au premier mélange issu de l'étape C) pour obtenir un mélange final,
- E) le mélange final est gélifié au sein du co-malaxeur (4), par malaxage et chauffage jusqu'à une température allant d'environ 160°C à environ 180°C, de préférence à une température d'environ 170°C,
- F) le mélange final gélifié obtenu à l'issue de l'étape E) est extrudé à la sortie (20) du co-malaxeur pour obtenir ledit compound.

2. Procédé selon la revendication 1, **caractérisé en ce qu'**il comprend en outre une ou plusieurs étapes intermédiaires prenant place entre l'étape C) et l'étape D), la ou lesdites étapes intermédiaires étant choisies parmi les étapes suivantes :

- C1) au moins un additif est introduit dans le co-malaxeur par l'une (17) des entrées intermédiaires et est ajouté au premier mélange,
- C2) au moins un pigment est introduit dans le co-malaxeur par l'une (18) des entrées intermédiaires et est ajouté au premier mélange,
- C3) au moins un composé recyclé est introduit dans le co-malaxeur par l'une (19) des entrées intermédiaires et est ajouté au premier mélange,
- C4) au moins un agent moussant est introduit dans le co-malaxeur par l'une (27) des entrées intermédiaires et est ajouté au premier mélange
- C5) une ou plusieurs portion(s) additionnelle(s) de fibres végétales est(sont) introduite(s) dans le co-malaxeur par l'une des entrées intermédiaires et est(sont) ajoutée(s) au premier mélange.

3. Procédé selon la revendication 2, **caractérisé en ce qu'**il comprend au moins l'étape C4).

4. Procédé selon l'une quelconque des revendications 1 à 3, **caractérisé en ce que** ladite première portion de fibres végétales représente d'environ 25% à environ 70%, de préférence d'environ 25% à environ 50%, en masse par rapport à la masse totale des fibres végétales introduites dans le co-malaxeur.

5. Procédé selon l'une quelconque des revendications 1 à 4, **caractérisé en ce que** ladite deuxième portion de fibres végétales représente d'environ 15% à environ 50%, de préférence d'environ 15% à environ 30%, en masse par rapport à la masse totale des fibres végétales introduites dans le co-malaxeur.

6. Procédé selon l'une quelconque des revendications 1 à 5, **caractérisé en ce qu'**à l'issue de l'étape F), ledit compound est soumis à une étape de granulation pour obtenir des granulés du compound.

7. Procédé selon la revendication 6, **caractérisé en ce que** les granulés sont ensachés.

8. Compound comprenant du polychlorure de vinyle et des fibres végétales, la teneur en fibres végétales étant d'au moins 50% en masse, de préférence d'au moins 60% en masse, par rapport à la masse du compound, susceptible d'être obtenu selon le procédé selon l'une quelconque des revendications 1 à 7.

9. Compound comprenant du polychlorure de vinyle et des fibres végétales, la teneur en fibres végétales étant d'au moins 50% en masse, de préférence d'au moins 60% en masse, par rapport à la masse du compound.

10. Méthode de fabrication en continu d'une structure extrudée comprenant du polychlorure de vinyle et des fibres végétales, la teneur en fibres végétales étant d'au moins 50% en masse, de préférence d'au moins 60% en masse, par rapport à la masse de ladite structure extrudée, comprenant au moins les étapes suivantes :

- i) le compound obtenu à l'issue de l'étape F) du procédé selon l'une quelconque des revendications 1 à 4 est introduit dans une filière (28),
- ii) à l'issue de la filière (28), le compound est mis en forme et refroidi au sein d'un conformateur (29),
- iii) à l'issue de l'étape ii), le compound mis en forme est soumis à une étape de tirage,
- iv) à l'issue de l'étape iii) le compound mis en forme et étiré est soumis à une étape de découpe afin d'obtenir la structure extrudée.

**11.** Méthode selon la revendication 10, **caractérisé en ce que** la structure extrudée est une lame destinée au bardage de bâtiments.

EP 4 424 775 A1

[Fig. 1]

[Fig. 2]

Europäisches
Patentamt

European
Patent Office

Office européen
des brevets

**RAPPORT DE RECHERCHE EUROPEENNE**

Numéro de la demande

EP 24 15 9443

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 020 429 A1 (LAPEYRE [FR]) 4 février 2009 (2009-02-04) | 8,9 | INV. C08L97/02 |
| A | * alinéas [0022], [0033] - [0039]; revendications * | 1-7,10, 11 | C08L27/06 |
| | ----- | | |
| X | KAMEL S: "PREPARATION AND PROPERTIES OF COMPOSITES MADE FROM RICE STRAW AND POLY(VINYL CHLORIDE)(PVC)", POLYMERS FOR ADVANCED TECHNOLOGIES, WILEY & SONS , BOGNOR REGIS, GB, vol. 15, no. 10, 1 octobre 2004 (2004-10-01), pages 612-616, XP001235121, ISSN: 1042-7147, DOI: 10.1002/PAT.514 * le document en entier * | 8,9 | |
| | ----- | | |
| X | WO 2007/050324 A1 (ARKEMA INC [US]; SHEN XIANFENG [US] ET AL.) 3 mai 2007 (2007-05-03) * exemples * | 8,9 | |
| | ----- | | |
| X | US 2017/051148 A1 (KIKUCHI TAKEYASU [JP] ET AL) 23 février 2017 (2017-02-23) * revendications * | 8,9 | |
| | ----- | | |

**DOMAINES TECHNIQUES RECHERCHES (IPC)**

C08L

Le présent rapport a été établi pour toutes les revendications

| Lieu de la recherche | Date d'achèvement de la recherche | Examinateur |
|---|---|---|
| Munich | 12 juillet 2024 | Lartigue, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 .......................................................................................
& : membre de la même famille, document correspondant

EPO FORM 1503 03.82 (P04C02)

**EP 4 424 775 A1**

## ANNEXE AU RAPPORT DE RECHERCHE EUROPEENNE
## RELATIF A LA DEMANDE DE BREVET EUROPEEN NO.

EP 24 15 9443

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-07-2024

| Document brevet cité au rapport de recherche | Date de publication | Membre(s) de la famille de brevet(s) | Date de publication |
|---|---|---|---|
| EP 2020429 A1 | 04-02-2009 | EP 2020429 A1 | 04-02-2009 |
| | | FR 2919614 A1 | 06-02-2009 |
| WO 2007050324 A1 | 03-05-2007 | CA 2626992 A1 | 03-05-2007 |
| | | EP 1940608 A1 | 09-07-2008 |
| | | US 2008261019 A1 | 23-10-2008 |
| | | WO 2007050324 A1 | 03-05-2007 |
| US 2017051148 A1 | 23-02-2017 | AUCUN | |

EPO FORM P0460

Pour tout renseignement concernant cette annexe : voir Journal Officiel de l'Office européen des brevets, No.12/82